# EUROPEAN PATENT APPLICATION

(11) **EP 2 765 783 A1**
(43) Date of publication of application: **13.08.2014**
(21) Application number: 13305163.1
(22) Date of filing: 11.02.2013
(51) Int. Cl.: H04N 21/43, H04N 21/462, H04N 21/4722

(54) **Method and device for enriching a multimedia content defined by a timeline and a chronological text description**

(71) Applicant: Thomson Licensing, 92130 Issy-les-Moulineaux (FR)
(72) Inventor: Guegan, Marie, 35576 Cessons-Sévigné (FR); Lanagan, James, 35576 Cesson-Sévigné (FR); Schmouker, Philippe, 35576 Cesson-Sévigné (FR); Lambert, Anne, 35576 Cesson-Sévigné (FR)
(74) Representative: Huchet, Anne

(57) **Abstract**

The invention concerns a method for enriching a multimedia content defined by a timeline and by a chronological text description,
characterized in that it comprises the following steps of:
- identifying (E3) using natural language processing at least one feature in a text document, so as to determine a part of said text document corresponding to said feature,
- automatically aligning (E4) said determined part of the text document to at least a part of the chronological text description, which semantically corresponds to said determined part of the text document,
so that at least the part of the text document is automatically synchronized with the timeline of the multimedia content, the chronological text description being itself synchronized with the timeline.

## Description

### FIELD OF THE INVENTION

The present invention relates generally to the association of metadata to a multimedia content and, in particular, to a method and device for enriching a multimedia content defined by a timeline and by a chronological text description with, for instance, comments posted by Web users on a social network or other user-generated content repositories such as web forums.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The text analysis of comments on a multimedia content (e.g. movies) wrote by non-professional authors (as a TV user) has gained a strong interest in recent years with the development of social networks and platforms, such as TWITTER and YOUTUBE, and other Web forums.

In particular, several researches focus on the synchronization of user comments with a video content and, especially, with the timeline of said video content.

It is then known to enhance an audiovisual content by using text micro-posts generated through social networks (as a tweet thanks to the TWITTER platform) during live events, the synchronization being done directly by using the timestamp of micro-posts.

In addition, it is also known systems allowing users to view a video content and to simultaneously post comments which are automatically and naturally associated with a time within the video.

In both cases, the synchronization of the comments with the timeline of the audiovisual content, if achieved, is straightforward since the comments have already a timecode, thanks to timestamping.

In other words, those prior art techniques allow for synchronizing the comments with the timeline of a multimedia content, only because each comment is associated with temporal information (e.g. the time a text micro-post has been sent on its corresponding social network), said multimedia content being played simultaneously.

Nevertheless, one downside of those prior art techniques relies on the fact that they require to write the comments during the playback of the multimedia content, in order to match the time of emission of each comment with a specific time point of the multimedia content. In addition, since it takes time to write a comment, its content might be related to a previous scene of the multimedia content, and not to the scene to which the comment is finally associated. In other words, the synchronization appears to be inaccurate.

The present invention attempts to remedy at least some of the previously mentioned downsides and to align, in particular, textual metadata to a multimedia content at a specific time point in its corresponding timeline without using any timecode.

### SUMMARY OF THE INVENTION

The present invention concerns a method for enriching a multimedia content defined by a timeline and by a chronological text description.

To this end, the method comprises the steps of:
- identifying, using natural language processing, at least one feature in a text document, so as to determine at least a part of said text document corresponding to said feature,
- automatically aligning said determined part of the text document to at least a part of the chronological text description, which semantically corresponds to said determined part of the text document,
so that at least the part of the text document is automatically synchronized with the timeline of the multimedia content.

In the present specification, it should be understood that:
- a text document denotes any kind of text written by professionals or non-professional users - especially, but not exclusively, Web and/or TV users - such as reviews, comments, blog or forum posts, encyclopedia articles, news articles, etc. Obviously, a text document can be made of alphanumeric characters,
- an author is the person who wrote such a text document (e.g. a Web user, a TV user, etc.),
- a multimedia content might correspond to an audiovisual document (e.g. movie, sport event, radio programme, etc.),
- a chronological text description corresponds to any kind of text document describing chronologically a multimedia content. As non-limiting examples, such a chronological text description may be a movie script, a football match summary, movie subtitles, a movie audio description script, etc.,
- a feature is a particular element of the multimedia content that is mentioned, described or evaluated in a text document, such as a specific scene, event or action, a particular aspect of the movie (named entity, actor, director, light, etc.) or a particular aspect in a specific scene.

In addition, in the following specification, it is assumed that the multimedia content and its chronological text description have already been aligned together thanks to well-known techniques, so that the chronological text description is directly and already synchronized with the timeline of the multimedia content. In a variant, such an alignment might be performed after the implementation of the present invention.

Thus, thanks to the present invention, a text to text alignment can be performed between a text document and the chronological text description of a multimedia content without, necessarily, using timecodes or time information. Such a method might align at least a piece of text document with one or several corresponding parts of a chronological text description of a multimedia content, so as to associate one or several time points or intervals of the timeline it is referring to within the chronological text description.

The method of the invention does not intend to match directly a text document, or a part of it, with the multimedia content, but only through the corresponding chronological text description.

Moreover, it should be appreciated that a feature mentioned in a single text document may refer to several distinct time points or intervals in the chronological text description.

In addition, Natural language Processing is a field of computer science, artificial intelligence, and linguistics concerned with the interactions between computers and human (natural) languages. As such, NLP is related to the area of human-computer interaction.

In an aspect of the present invention, said text document can be identified, from a set of text documents, as being related to the multimedia content.

In addition, said set of text documents might be retrieved from the Internet network.

In another aspect of the present invention, during the step of aligning, an anaphora resolution technique might advantageously be implemented to perform the semantic correspondence between the said determined part of the text document and the chronological text description.

Besides, the step of identifying and the step of aligning can be applied on a plurality of text documents to automatically synchronize said text documents with the timeline of the multimedia content.

According to a preferred embodiment of the invention, the feature belongs to the following group of features comprising at least:
- a combination of words;
- a semantic entity;
- a list of words;
- an event.

Preferably, the natural language processing corresponds to an entity recognition treatment or to a feature based sentiment analysis.

In an example of realization of the present invention, the multimedia content is an audiovisual content and the text document is a post wrote by a Web user.

In another aspect of the present invention, the multimedia content being segmented into scenes to which a corresponding time interval of the timeline is associated with, the text document can be synchronized to the time interval of the scene it is related to, as a result of its synchronization to the associated chronological text description.

Moreover, the present invention also concerns a system for enriching a multimedia content defined by a timeline and a chronological text description. According to the invention, said system comprised:
- a natural language processing module configured to identify at least one feature in a text document, so as to determine at least a part of said text document corresponding to said feature,
- an alignment module for automatically aligning said determined part of the text document to at least a part of the chronological text description, which semantically corresponds to said determined part of the text document, so that at least the part of the text document is automatically synchronized with the timeline of the multimedia content.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a block diagram of a system for enriching a multimedia content according to a preferred embodiment of the present invention;
- Figure 2 is a flowchart illustrating the steps implemented by a method for enriching a multimedia content according to the preferred embodiment;
- Figure 3 is global diagram depicting the steps for enriching a movie according to the preferred embodiment;
- Figure 4 represents a screenshot of a post written by a first user in reply to a previous second user's post, from a movie dedicated Web site.

Wherever possible, the same reference numerals will be used throughout the figures to refer to the same or like parts.

### DETAILED DESCRIPTION OF PREFERRED EMBODIMENTS

According to an example of a preferred embodiment, the present invention is depicted with regard to a movie to which a timeline and a script are associated.

Obviously, the present invention is not restricted to this example and can be applied to any multimedia content defined by a timeline and by at least one chronological text description.

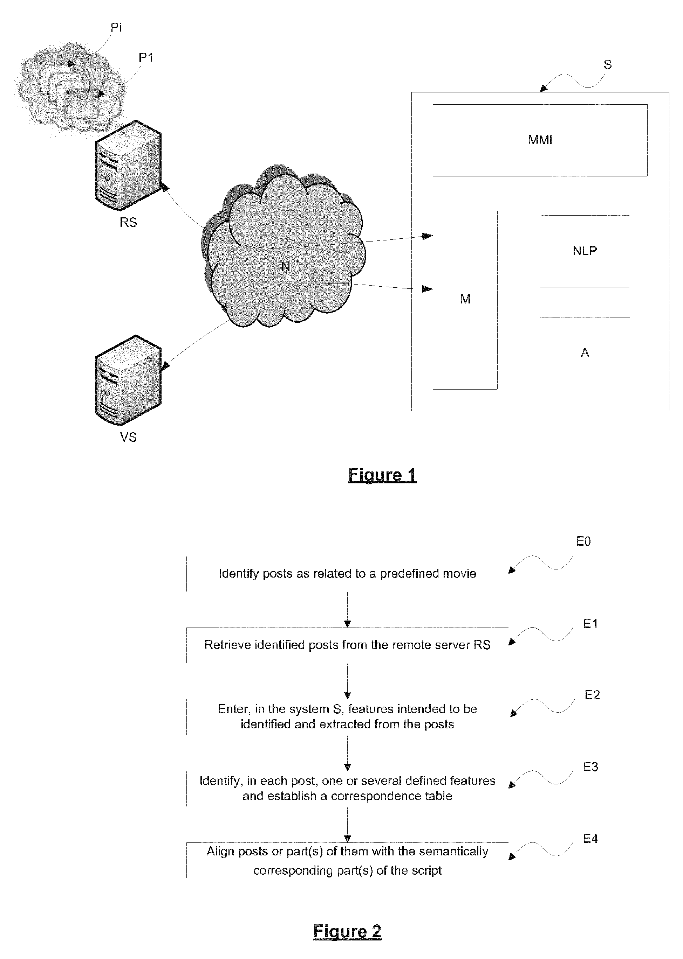

Figure 1 depicts, according to this example, a system S for enriching the movie with text documents (e.g. posts wrote by professional and/or non professional Web/TV users). The movie is made of a succession of chronological scenes.

In particular, the system S is connected - directly or through a gateway (not represented on Figure 1) - to a network N (e.g. the Internet Network). Obviously, in a variant, said system S might not be connected to any network.

A set of posts Pi (*i*∈ [1*; N*]*,* N integer) related to the movie is stored on a remote server RS (as for example a movie dedicated Web site like IMDb), connected to the network N. Said set of posts Pi related to the movie might be retrieved from the server RS by the system S, using the Internet network N, and might be stored in an adapted memory M of the system S.

Moreover, in the example, the movie and the corresponding script might be downloaded from a video server VS, through the Internet network N, and might be stored in said memory M. Naturally, in a variant, the movie may be retrieved from any other adapted ways (e.g. from a USB key or a DVD). Obviously, in a variant, the remote server RS and the video server VS might be the same server.

The system S also comprises a man-machine interface MMI (as for example a touch screen), intended to be used by an operator to enter one or several distinct features to be extracted from the set of posts Pi. Naturally, the features might be defined and/or selected automatically. Once entered in the system S, the features might be stored in the memory M.

Each feature is a particular element of the movie which might be mentioned, described or evaluated in a post Pi, such as a specific scene, event or action, a particular aspect of the movie (named entity, actor, director, light, etc.) or a particular aspect in a specific scene.

In particular, a feature might be:
- a combination of words;
- a semantic entity;
- a list of words;
- an event;
- etc.

As shown on Figure 1, the system S also comprises a Natural Language Processing module NLP (e.g. a processor) for automatically identifying, for each post Pi stored in the memory M, at least one of said features entered in the system S. In particular, the module NLP is able to determine whether or not a post Pi is related to a predefined feature and, in case the post Pi contains a reference to said feature, the particular part or parts of said post corresponding to said feature.

In particular, the natural language processing can correspond to an entity recognition treatment and/or to a feature based sentiment analysis, as defined, for instance, in the document "Aspect-based sentiment analysis of movie reviews on discussion boards" (Thet & al., 2010) published by the Journal of Information Science, 36(6), 823-848.

Once at least some defined features have been identified, a correspondence table might be established to associate with each predefined features the corresponding part or parts of posts Pi which have been identified by the module NLP. This correspondence table might be stored in the memory M.

Moreover, as shown on the Figure 1, the system S additionally comprises an alignment module A (e.g. a processor) for automatically aligning the determined part or parts of posts Pi to the corresponding part or parts of the script of the movie, which semantically correspond to said determined part(s) of posts Pi.

In particular, the semantic correspondence may be obtained by computing text similarity measures between the extracted feature(s) and parts of the chronological text description: for example, using the Jaccard coefficient (as defined in *"*Étude comparative de la distribution florale dans une portion des Alpes et des Jura" (Jaccard, Paul (1901) published in the Bulletin de la Société Vaudoise des Sciences Naturelles 37: 547-579) or cosine measures (as in defined at the following Web address http://en.wikipedia.org/wiki/Cosine_similarity), or simply by computing the number of words in common. Then the part of the post containing the feature is aligned to the closest parts of the chronological text according to this textual similarity score.

In an alternative, the semantic correspondence may itself be conducted using Natural Language Processing.

In addition, the alignment module A can implement an anaphora resolution technique to perform the semantic correspondence between the determined part(s) of posts Pi and the script of said movie.

In this way, each identified feature of a post Pi is aligned to a specific point in the script, which might be a scene (each scene being identified by a predetermined time interval) or a more precise time information of the timeline (e.g. a minute). As a consequence, posts Pi get aligned to the script, possibly at multiple time points.

Thanks to the present invention, posts Pi or part(s) of them are directly and automatically synchronized with the script of the movie. A text-to-text synchronization of posts with the script is thus implemented.

In the case where the script is already temporally aligned with the movie, posts Pi or part(s) of them become implicitly temporally aligned to the movie as well, through the script.

The present invention can then perform the alignment of text documents to a chronological description of a multimedia content without using the chronological information nor time-stamps.

The flow chart of Figure 2 depicts the various steps of the method for enriching a movie defined by a timeline and by a script according to the preferred embodiment of the invention.

In a first preliminary step E0, posts Pi - stored on the remote server RS - are preliminary identified as related to the considered movie.

In a further step E1, identified posts Pi are retrieved from the remote server RS, so as to be stored in the memory M of the system S.

In a further step E2, the features intended to be identified and extracted from the posts Pi are defined and entered in the system S, via the man-machine interface MMI (or, in a variant, through software programming).

In a further step E3, the module NLP automatically identifies, in each post Pi, one or several defined features and establishes a correspondence table, wherein, to each predefined feature, corresponding posts Pi or part(s) of them are associated with.

In a further step E4, the alignment module A automatically aligns the posts Pi or part(s) of them with the semantically corresponding part(s) of the script.

Naturally, the previous steps might be implemented in a different order.

Then, once the alignment has been performed for a predetermined movie, the aligned posts Pi might be stored with the script, so that, during the playback of the movie, aligned posts Pi or part(s) of them can pop up, at a corresponding time point, on the main display device (e.g. a TV) and/or on a second screen (e.g. a tablet).

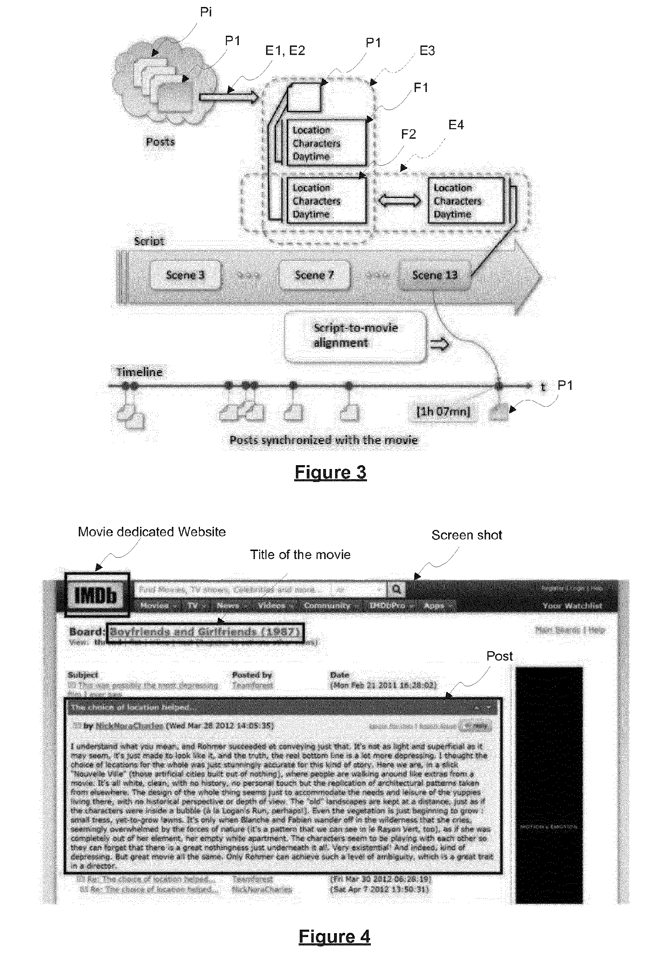

Figure 3 illustrates steps E1 to E4 of the method for enriching a movie with written posts Pi. Two defined features F1 and F2 are illustrated. Each feature F1, F2 comprises a combination of words, namely Location, Characters and Daytime.

In particular, on Figure 3, the script-to-movie alignment is represented. This additional and well-known step might be performed before or after any of the steps E1 to E4.

Besides, as a first illustrative but non-limiting example, the Figure 4 shows a screen shot of a post written by a first user in reply to a previous second user's post. This post has been retrieved from the movie dedicated Web site IMDb and has the following content:
"*I understand what you mean, and Rohmer succeeded at conveying just that. It's not* as *light and superficial* as *it may seem, it's just made to look like it, and the truth, the real bottom line is a lot more depressing. I thought the choice of locations for the whole was just stunningly accurate for this kind of story. Here we are, in a slick "Nouvelle Ville" (those artificial cities built out of nothing), where people are walking around like extras from a movie. It's all white, clean, with no history, no personal touch but the replication of architectural patterns taken from elsewhere. The design of the whole thing seems just to accommodate the needs and leisure of the yuppies living there, with no historical perspective or depth of view. The "old" landscapes are kept at a distance, just* as *if the character were inside a bubble* (*à la Logan's Run, perhaps!). Even the vegetation is just beginning to grow: small tress, yet-to-grow lawns. It's only when Blanche and Fabien wander off in the wilderness that she cries, seemingly overwhelmed by the forces of nature* (*it's a pattern that we can see in le Rayon Vert, too),* as *if she was completely out of her element, her empty white apartment. The characters seem to be playing with each other so they can forget that there is a great nothingness just underneath it all. Very existential! And indeed, kind of depressing. But great movie all the same. Only Rohmer can achieve such a level of ambiguity, which is a great trait in a director.* "

The text of the post is very rich and refers to many aspects of the movie entitled "Boyfriends and Girlfriends", as well as specific locations and/or scenes, as for instance:
- location: *"her empty white apartment";*
- scene: *"when Blanche and Fabien wander off in the wilderness [...] she cries".*

After the step E3 of identification performed by the system S, the following table of correspondence might be established:

| **Feature** | **Part of the post** |
|---|---|
| Location | *"her empty white apartment"* |
| Scene | *"when Blanche and Fabien wander off in the wilderness [...] she cries"* |

It is assumed that the movie script provides the following information of the scenes:

| **Scene** | **(...)** | **3** | **(...)** | **7** | **(...)** | **13** | **(...)** |
|---|---|---|---|---|---|---|---|
| Location | | Blanche's apartment | | Forest | | Blanche's apartment | |
| Characters | | Blanche, Léa | | Blanche, Fabien | | Blanche, Fabien | |

The alignment module A of the system S realizes, in step E4, the mapping of the script timeline with extracted posts or part(s) of them.

In particular, the first feature indicates a location. According to the script, scenes 3 and 13 both take place in an apartment. This part of the post may refer to these scenes. This could be checked or improved using, as previously mentioned, anaphora resolution techniques, which would link the word "her" (in "her empty white apartment") to Blanche.

The second feature describes a scene with Blanche and Fabien which takes place "in the wilderness". Characters match in both scenes 7 and 13. However, "wilderness" is much closer semantically to "forest" than to "apartment". This could be found using external word ontologies such as WordNet . Scene 13 is thus discarded.

As a result, one might know that this post refers to scenes 3, 7 and 13, and it is able to point out in the text which portions correspond to which scene.

In a second illustrative but non-limiting example, the multimedia content is soccer game video (Chelsea versus Barcelona). Posts are forum comments referring to this soccer game, which can be crawled on sport dedicated websites. The script is a textual summary of the soccer game. It may be, for instance:
- a transcript of the audio summary made by a presenter;
- a newspaper report of the match (written in chronological order);
- a soccer ticker giving key moments within the game;
- etc.

Hereinafter is represented a ticker showing the main moments during a section of the soccer game:

### FT: Chelsea 1 Barcelona 0

Last updated: 18th April 2012

A mistake from Messi, of all people, allows Ramires to break and he picks out Drogba with a pinpoint cross after a storming run, allowing the striker to drive home with a great finish.

### GOAL! DROGBA OPENS THE SCORING TO MAKE lT 1-0 TO CHELSEA!

45+2 Its Messi's turn to go down as he slips awkwardly but he's back on his feet seconds later. Barca are in possession as the seconds trickle down...

45+1 Drogba goes down in another heap as two minutes stoppage time are added this half, but nothing is given.

45 Messi tries to pick out Sanchez in the Chelsea, box but hoofs his pass over his team-mate's head, prompting shouts of 'who are ya?' from the home faithful.

44 Heart-stopping moment there for Chelsea, and vital last-gasp clearance from Cole. Messi tries another shot seconds later but mishits it.

Since each sport has its specific glossary (e.g. goal, basket, foul, line-out, etc.), some terms of this glossary can be used to perform an alignment between the script and the retrieved posts.

It is then possible to pull out the names of players involved in the game, some specific terms such as goal, chronological information, etc.

In Figure 1, the represented blocks of the system S are purely functional entities, which do not necessarily correspond to physically separate entities. Namely, they could be developed in the form of software, hardware, or be implemented in one or several integrated circuits.

References disclosed in the description, the claims and the drawings may be provided independently or in any appropriate combination. Features may, where appropriate, be implemented in hardware, software, or a combination of the two.

This invention having been described in its preferred embodiment, it is clear that it is susceptible to numerous modifications and embodiments within the ability of those skilled in the art and without the exercise of the inventive faculty. Accordingly, the scope of the invention is defined by the scope of the following claims.

All examples and conditional language recited herein are intended for pedagogical purposes to aid the read in understanding the principles of the invention and the concepts contributed by the inventor to furthering the art and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

## Claims

1. Method for enriching a multimedia content defined by a timeline and by a chronological text description,
**characterized in that** it comprises the following steps of:
- identifying (E3), using natural language processing, at least one feature in a text document (Pi), so as to determine at least a part of said text document corresponding to said feature (F1, F2),
- automatically aligning (E4) said determined part of the text document (Pi) to at least a part of the chronological text description, which semantically corresponds to said determined part of the text document (Pi),
so that at least the part of the text document (Pi) is automatically synchronized with the timeline of the multimedia content.

2. Method according to claim 1, wherein said text document (Pi) is identified (E1), from a set of text documents (Pi), as being related to the multimedia content.

3. Method according to claim 2, wherein said set of text documents is retrieved (E2) from the Internet network (N).

4. Method according to one of the preceding claims, wherein, during the step of aligning (E4), an anaphora resolution technique is implemented to perform the semantic correspondence between the said determined part of the text document (Pi) and the chronological text description.

5. Method according to one of the preceding claims, wherein the step of identifying (E3) and the step of aligning (E4) are applied on a plurality of text documents (Pi) to automatically synchronize said text documents (Pi) with the timeline of the multimedia content.

6. Method according to one of the preceding claims, wherein the feature (F1, F2) belongs to the following group of features comprising at least:
- a combination of words;
- a semantic entity;
- a list of words;
- an event.

7. Method according to one of the preceding claims, wherein the natural language processing corresponds to an entity recognition treatment or to a feature based sentiment analysis.

8. Method according to one of the preceding claims, wherein the multimedia content is an audiovisual content and the text document is a post (Pi) written by a Web user.

9. Method according to one of the preceding claims, wherein, the multimedia content is segmented into scenes to which a corresponding time interval of the timeline is associated, the text document (Pi) is synchronized to the time interval of the scene it is related to.

10. A system for enriching a multimedia content defined by a timeline and a chronological text description,
**characterized in that** it comprises:
- a natural language processing module (NLP) configured to identify at least one feature (F1, F2) in a text document (Pi), so as to determine at least a part of said text document (Pi) corresponding to said feature (F1, F2),
- an alignment module (A) for automatically aligning said determined part of the text document (Pi) to at least a part of the chronological text description, which semantically corresponds to said determined part of the text document,
so that at least the part of the text document (Pi) is automatically synchronized with the timeline of the multimedia content.
